# EUROPEAN PATENT APPLICATION

(11) **EP 3 667 501 A1**
(43) Date of publication of application: **17.06.2020**
(21) Application number: 18867075.6
(22) Date of filing: 09.10.2018
(51) Int. Cl.: G06F 9/54

(54) **METHOD AND DEVICE FOR PROCESSING NOTIFICATION**

(30) Priority: 09.10.2017 CN 201710931707; 27.10.2017 CN 201711023326
(71) Applicant: Huawei Technologies Co., Ltd., Longgang District Shenzhen, Guangdong 518129 (CN)
(72) Inventor: MAO, Yanyan, Shenzhen Guangdong 518129 (CN); WANG, Hongjun, Shenzhen Guangdong 518129 (CN)
(74) Representative: Maiwald Patent- und Rechtsanwaltsgesellschaft mbH
(86) International application number: PCT/CN2018/109504
(87) International publication number: WO 2019/072173

(57) **Abstract**

A notification processing method and apparatus are provided, to improve user experience that is low in the prior art due to an inflexible method for implementing delayed displaying of a notification by relying on a user setting. The method includes: receiving, by a terminal device, a notification; determining whether a user performs a removal operation within preset duration before a moment at which the notification is received; and determining a delay duration value in response to determining that the user performs a removal operation within the preset duration, and instructing to display the notification after a delay time of the delay duration value. In this way, the terminal device may determine a delay duration value in response to determining that the user performs a removal operation within preset duration before a moment at which a notification is received, to automatically instruct to display the notification after a delay time of the delay duration value, without needing a manual setting of the user. In this way, flexibility of delayed displaying of a notification can be improved, and user experience can be improved.

## Description

### TECHNICAL FIELD

This application relates to the field of information technologies, and in particular, to a notification processing method and apparatus.

### BACKGROUND

When a user is using a terminal device such as a mobile phone or a tablet computer, in many cases, the terminal device frequently receives all sorts of push notifications, specific to various applications installed on the terminal device, sent from network servers corresponding to the applications, and displays the notifications in real time. When the terminal device constantly receives notifications, the user sequentially removes the notifications displayed by the terminal device, to eliminate interference to the user. For example, when the user is using a first application, the terminal device may receive a plurality of notifications that are pushed by a network server to the first application or another application. In order to avoid impact on usage of the first application, the user needs to continuously remove these notifications. Consequently, experience of the user when using the first application is affected.

Currently, to reduce interference caused by a notification to a user, a terminal device is configured with a delay setting function, which enables the user to change a time of displaying a notification, so that the terminal device displays the notification after a delay time set by the user. Specifically, when the user is interfered with by the notification, each time the terminal device displays a notification, the user may enter a delay setting page, to set a display time interval of the notification to be prolonged by 15 minutes, 30 minutes, or 1 hour, so that after a next notification of the received and displayed current notification reaches the terminal device, the next notification is displayed after delay duration that is set by the terminal device.

However, in the foregoing method, delayed displaying of a notification requires a manual setting of the user each time. Apparently, user experience is poor by using the foregoing inflexible method for implementing delayed displaying of a notification by relying on a user setting.

### SUMMARY

This application provides a notification processing method and apparatus, to improve user experience that is low in the prior art due to an inflexible method for implementing delayed displaying of a notification by relying on a user setting.

According to a first aspect, this application provides a notification processing method, and the method includes:
receiving, by a terminal device, a notification; determining, by the terminal device, whether a user performs a removal operation within preset duration before a moment at which the notification is received; and determining, by the terminal device, a delay duration value in response to determining that the user performs a removal operation within the preset duration, and instructing to display the notification after a delay time of the delay duration value.

According to the foregoing method, the terminal device may determine a delay duration value in response to determining that the user performs a removal operation within preset duration before a moment at which a notification is received, to automatically instruct to display the notification after a delay time of the delay duration value, without needing a manual setting of the user. In this way, flexibility of delayed displaying of a notification can be improved, and user experience can be improved.

In a possible design, the notification may be displayed in a manner preset by the user, for example, displayed in a form of a banner notification, a reminder, or the like.

In a possible design, the receiving, by a terminal device, a notification may be specifically: receiving, by the terminal device, a notification in a preset scenario.

In a possible design, the preset scenario may be but is not limited to: the terminal device is in a full-screen display state; or the terminal device is in a state of displaying a preset user interface of an application.

In a possible design, the determining, by the terminal device, whether a user performs a removal operation within preset duration before a moment at which the notification is received; and determining a delay duration value in response to determining that the user performs a removal operation within the preset duration specifically includes: obtaining, by the terminal device, a quantity of removal operations performed by the user within the preset duration, and determining a delay duration value corresponding to the quantity of removal operations; or determining, by the terminal device, whether the user performs a removal operation within the preset duration before the moment at which the notification is received; and obtaining a preset delay duration value in response to determining that the user performs a removal operation within the preset duration.

According to the foregoing method, the terminal device can accurately determine the delay duration value, so that the terminal device subsequently instructs to display the notification after a delay time of the delay duration value.

In a possible design, the obtaining, by the terminal device, a quantity of removal operations performed by the user within the preset duration, and determining a delay duration value corresponding to the quantity of removal operations specifically includes: obtaining, by the terminal device, the quantity of removal operations performed by the user within the preset duration; and determining, in response to determining that the quantity of removal operations performed by the user within the preset duration is greater than or equal to 1, the delay duration value corresponding to the quantity of removal operations.

According to the foregoing method, the terminal device can accurately determine the delay duration value, so that the terminal device subsequently instructs to display the notification after a delay time of the delay duration value.

In a possible design, a specific method for determining, by the terminal device, the delay duration value corresponding to the quantity of removal operations may be but is not limited to the following three methods:
Method 1: The terminal device determines a specified quantity threshold range to which the quantity of removal operations belongs, and queries, based on a preset correspondence between a specified quantity threshold range and a delay duration value, a delay duration value corresponding to the determined specified quantity threshold range.
Method 2: The terminal device determines, based on a preset correspondence between a quantity of removal operations and a delay duration value, the delay duration value corresponding to the quantity of removal operations.
Method 3: The terminal device determines, based on a preset function relationship between a quantity of removal operations and a delay duration value, the delay duration value corresponding to the quantity of removal operations.

According to the foregoing method, the terminal device can accurately determine the delay duration value corresponding to the quantity of removal operations, so that the terminal device subsequently instructs to display the notification after a delay time of the delay duration value.

In a possible design, the determining, by the terminal device, whether the user performs a removal operation within the preset duration before the moment at which the notification is received; and obtaining a preset delay duration value in response to determining that the user performs a removal operation within the preset duration specifically includes: obtaining, by the terminal device, the quantity of removal operations performed by the user within the preset duration; and obtaining the preset delay duration value in response to determining that the quantity of removal operations performed by the user within the preset duration is not zero.

According to the foregoing method, the terminal device can accurately determine the delay duration value, so that the terminal device subsequently instructs to display the notification after a delay time of the delay duration value.

In a possible design, the determining, by the terminal device, whether the user performs a removal operation within the preset duration before the moment at which the notification is received; and obtaining a preset delay duration value in response to determining that the user performs a removal operation within the preset duration specifically includes: querying, by the terminal device, a preset flag of the removal operation; and obtaining the preset delay duration value in response to determining that the preset flag is 1.

According to the foregoing method, the terminal device can accurately determine the delay duration value, so that the terminal device subsequently instructs to display the notification after a delay time of the delay duration value.

In a possible design, the determining, by the terminal device, whether a user performs a removal operation within preset duration may specifically include: determining, by the terminal device, whether a removal operation is performed on any displayed notification within the preset duration; or determining, by the terminal device, a notification source of the notification, and determining whether a removal operation is performed on the notification from the notification source within the preset duration; or determining, by the terminal device, a priority of the notification, and determining whether a removal operation is performed, within the preset duration, on a notification whose priority is higher than the determined priority.

According to the foregoing method, the terminal device can accurately determine whether the user performs a removal operation within the preset duration, and further perform corresponding processing on the notification according to a determining result.

In a possible design, the notification source of the notification is a first application or a specified contact of a second application, and either of the first application and the second application is any one of at least one application installed on the terminal device. For example, the notification source of the notification may be an application such as microblog, a news application, or the like, or may be a first contact in WeChat, a second contact in an SMS application, or the like.

According to a second aspect, an embodiment of this application further provides a notification processing apparatus, and the notification processing apparatus has a function of implementing behavior of the terminal device in the foregoing method embodiment. The function may be implemented by using hardware, or implemented by hardware executing corresponding software. The hardware or the software includes one or more modules corresponding to the foregoing function.

In a possible design, a structure of the notification processing apparatus includes a secondary receiving unit and a processing unit. These units may perform corresponding functions in the foregoing example method. For details, refer to detailed descriptions in the example method. Details are not described herein again.

In a possible design, the structure of the notification processing apparatus includes a communications module, a processor, a memory, and a display panel. The communications module is configured to receive a notification. The display panel is configured to display a notification. The processor is configured to support the notification processing apparatus in performing a corresponding function in the foregoing method. The memory is coupled to the processor, and the memory stores a program instruction and data that are necessary for the notification processing apparatus.

In a possible design, the structure of the notification processing apparatus includes a processor and a memory that are connected to each other, and the processor is configured to read and execute a program instruction stored in the memory, to perform any one of the foregoing methods.

According to a third aspect, an embodiment of this application further provides a computer storage medium, where the computer storage medium stores a computer executable instruction, and when the computer executable instruction is invoked by a computer, the computer is enabled to perform any one of the foregoing methods.

According to a fourth aspect, an embodiment of this application further provides a computer program product including an instruction, and when the computer program product runs on an electronic device, the electronic device is enabled to perform any one of the foregoing methods.

According to a fifth aspect, an embodiment of this application further provides a notification processing apparatus, where the notification processing apparatus may be a chip, and the notification processing apparatus is connected to a memory, and is configured to read and execute a program instruction stored in the memory, to implement any one of the foregoing methods.

In the embodiments of this application, the terminal device receives a notification; determines whether the user performs a removal operation within preset duration before a moment at which the notification is received; and determines a delay duration value in response to determining that the user performs a removal operation within the preset duration, and instructs to display the notification after a delay time of the delay duration value. According to the method, the terminal device may determine a delay duration value in response to determining that the user performs a removal operation within preset duration before a moment at which a notification is received, to automatically instruct to display the notification after a delay time of the delay duration value, without needing a manual setting of the user. In this way, flexibility of delayed displaying of a notification can be improved, and user experience can be improved.

### BRIEF DESCRIPTION OF DRAWINGS

FIG. 1 is a structural block diagram of a terminal device according to this application;
FIG. 2 is a schematic flowchart of a notification processing method according to this application;
FIG. 3 is a schematic diagram of displaying a notification by a terminal device according to this application;
FIG. 4 is a schematic diagram of removing, by a user, a notification displayed by a terminal device according to this application;
FIG. 5 is a schematic diagram of notification processing according to this application;
FIG. 6 is a schematic diagram of notification processing according to this application;
FIG. 7A, FIG. 7B, and FIG. 7C are a schematic diagram of notification processing according to this application;
FIG. 8 is a schematic structural diagram of a notification processing apparatus according to this application; and
FIG. 9 is a schematic structural diagram of a notification processing apparatus according to this application.

### DESCRIPTION OF EMBODIMENTS

The following further describes this application in detail with reference to accompanying drawings.

This application provides a notification processing method and apparatus, to improve user experience that is low in the prior art due to an inflexible method for implementing delayed displaying of a notification by relying on a user setting. The method and the apparatus in this application are based on a same inventive concept. The method and the apparatus have similar principles for resolving problems. Therefore, for implementation of the apparatus and the method, reference may be made to each other, and details of repeated parts are not described.

The following describes some terms in this application, to facilitate understanding of a person skilled in the art.
(1) An application such as an SMS application, an MMS application, various mailbox applications, WeChat, Tencent chat software (QQ), various video applications, a video website (YouTube), a photo sharing application (Snapchat), or DingTalk, is a set of software for implementing a specific service.
(2) A terminal device is a device on which various applications can be installed, and can receive and display various notifications pushed by network servers to the installed various applications. For example, the terminal device may be a mobile phone, a tablet computer, a personal digital assistant (personal digital assistant, PDA), a point of sales (point of sales, POS), a vehicle-mounted computer, or the like.
(3) The term "and/or" describes an association relationship for describing associated objects and represents that three relationships may exist. For example, A and/or B may represent the following three cases: Only A exists, both A and B exist, and only B exists. A character "/" usually indicates an "or" relationship between associated objects.
(4) "A plurality of' refers to two or more than two.
(5) In the description of this application, words such as "first" and "second" are merely used for distinction and description, and shall not be understood as an indication or implication of relative importance or an indication or implication of an order.

To describe the technical solutions in the embodiments of this application more clearly, the following describes, in detail with reference to the accompanying drawings, the notification processing method and apparatus provided in the embodiments of this application.

The embodiments of this application provide a notification processing method and apparatus that are applicable to a terminal device. The terminal device in the embodiments of this application may be a device such as a mobile phone, a tablet computer, a PDA, a POS, or a vehicle-mounted computer.

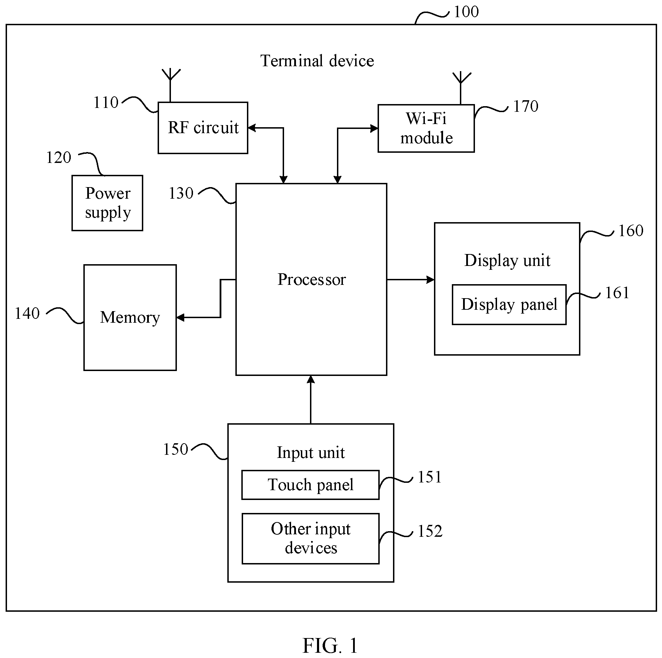

FIG. 1 is a structural block diagram of a part of a terminal device related to the embodiments of this application. Referring to FIG. 1, the terminal device 100 includes components such as a radio frequency (radio frequency, RF) circuit 110, a power supply 120, a processor 130, a memory 140, an input unit 150, a display unit 160, and a wireless fidelity (wireless fidelity, WiFi) module 170. A person skilled in the art may understand that a structure of the terminal device 100 shown in FIG. 1 does not constitute any limitation on the terminal device 100. The terminal device 100 may include more or fewer components than those shown in the figure, or may combine some components, or have a different component arrangement.

The following describes each constituent component of the terminal device 100 in detail with reference to FIG. 1.

The RF circuit 110 may be configured to receive and send data in an information receiving and sending process or a call process. Particularly, after receiving downlink data from a base station, the RF circuit 110 sends the downlink data to the processor 130 for processing. In addition, the RF circuit 110 sends to-be-sent uplink data to the base station. The RF circuit 110 usually includes but is not limited to an antenna, at least one amplifier, a transceiver, a coupler, a low noise amplifier (low noise amplifier, LNA), a duplexer, and the like. In addition, the RF circuit 110 may further communicate with a network and another device through wireless communication. The wireless communication may use any communications standard or protocol, including but not limited to a global system for mobile communications (global system for mobile communications, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short message service (short messaging service, SMS), and the like.

The memory 140 may be configured to store a software program and a module. The processor 130 executes various function applications of the terminal device 100 and processes data by running the software program and the module that are stored in the memory 140. Optionally, the memory 140 may mainly include a program storage area and a data storage area. The program storage area may store an operating system, various application programs (such as an SMS application and WeChat), and the like. The data storage area may store data created based on use of the terminal device 100, and the like. In addition, the memory 140 may include a high-speed random access memory, and may further include a nonvolatile memory, such as at least one magnetic disk storage component, a flash memory, or another volatile solid-state storage component.

The input unit 150 may be configured to receive entered digits or character information, and generate a key signal input related to a user setting and function control of the terminal device 100. Specifically, the input unit 150 may include a touch panel 151 and other input devices 152.

The touch panel 151, also referred to as a touchscreen, may collect a touch operation (for example, an operation performed by a user on or near the touch panel 151 by using any suitable object or accessory such as a finger or a stylus) performed by the user on or near the touch panel 151, and drive a corresponding connection apparatus based on a preset program. Optionally, the touch panel 151 may include two parts: a touch detection apparatus and a touch controller. The touch detection apparatus detects a touch direction and position of the user, detects a signal brought by the touch operation, and transmits the signal to the touch controller. The touch controller receives touch information from the touch detection apparatus, converts the touch information into touch point coordinates, then sends the touch point coordinates to the processor 130, and receives and executes a command sent by the processor 130. For example, when the user flicks up, on the touch panel 151 by using a finger, a notification displayed on the display panel 161, to remove the notification, the touch detection apparatus detects a signal brought by the flicking-up operation, and then transmits the signal to the touch controller. The touch controller converts the signal into coordinates and sends the coordinates to the processor 130. The processor 130 determines, based on the coordinates and a type (flicking up) of the signal, the operation (removal operation) performed on the notification, and then the processor 130 instructs not to display the notification.

In addition, the touch panel 151 may be implemented in a plurality of types, such as a resistive type, a capacitive type, an infrared type, and a surface acoustic wave type.

Optionally, the other input devices 152 may include, but are not limited to, one or more of a physical keyboard, a function key (such as a volume control key or a power on/off key), a trackball, a mouse, and a joystick.

The display unit 160 may be configured to display information entered by the user, information provided for the user, and various menus of the terminal device 100. As a display system of the terminal device 100, the display unit 160 is configured to present a user interface, to implement man-machine interaction. For example, after receiving various notifications that are pushed by network servers corresponding to various applications installed on the terminal device 100 to the applications, the RF circuit 110 sends the various notifications to the processor 130. The processor 130 then displays the various notifications by using the display unit 160, to present the user with the various notifications.

The display unit 160 may include a display panel 161. Optionally, the display panel 161 may be configured in a form of a liquid crystal display (liquid crystal display, LCD), an organic light-emitting diode (organic light-emitting diode, OLED), or the like. Further, the touch panel 151 may cover the display panel 161. After detecting a touch operation on or near the touch panel 151, the touch panel 151 transfers related information about the touch operation to the processor 130 to determine a type of the touch event. Subsequently, the processor 130 provides corresponding visual output on the display panel 161 based on the type of the touch event. For example, when detecting a flicking-up operation performed by the user on a notification on the touch panel 151, the touch panel 151 transmits information about the flicking-up operation to the processor 130. After determining that a type of the touch event is flicking-up, the processor 130 does not display the notification on the display panel 161, to implement visual output from a displayed notification to a notification that is not displayed.

In FIG. 1, the touch panel 151 and the display panel 161 are used as two independent components to implement input and output functions of the terminal device 100. However, in some embodiments, the touch panel 151 and the display panel 161 may be integrated to implement the input and output functions of the terminal device 100.

Wi-Fi is a short-distance wireless transmission technology. The terminal device 100 may be connected to an access point (access point, AP) by using the Wi-Fi module 170, to implement access to a data network. The Wi-Fi module 170 may be configured to receive and send data in a process of communicating with another device.

The processor 130 is a control center of the terminal device 100, is connected to each part of the entire terminal device 100 by using various interfaces and lines, and executes various functions of the terminal device 100 and processes data by running or executing a software program and/or a module stored in the memory 140 and invoking data stored in the memory 140, to implement a plurality of services that are based on the terminal device 100. Optionally, the processor 130 may include one or more processing units. Specifically, an application processor and a modem processor may be integrated into the processor 130. The application processor mainly processes an operating system, a user interface, an application, and the like. The modem processor mainly processes wireless communication. It can be understood that the modem processor may alternatively not be integrated into the processor 130.

The terminal device 100 further includes the power supply 120 (such as a battery) that supplies power to each component. Optionally, the power supply 120 may be logically connected to the processor 130 through a power supply management system, to implement functions such as charging management, discharging management, and power consumption management through the power supply management system.

It should be noted that, although not shown in FIG. 1, the terminal device 100 may further include a camera, a Bluetooth module, an audio circuit, a loudspeaker, a microphone, a sensor, and the like. Details are not described herein.

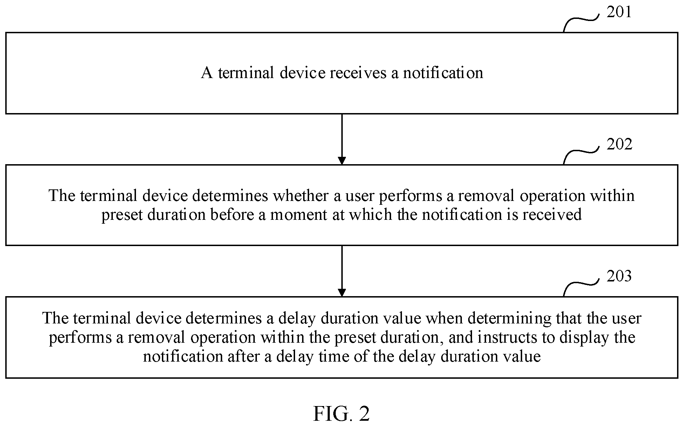

The notification processing method provided in the embodiments of this application is applicable to the terminal device 100 shown in FIG. 1. Therefore, in the embodiments of this application, the terminal device 100 is merely used as an example for description. Referring to FIG. 2, an embodiment of this application provides a notification processing method, and a specific procedure of the method includes the following steps.

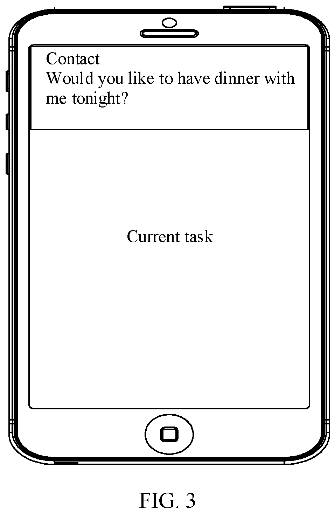

Step 201: The terminal device 100 receives a notification.
Usually, a plurality of applications (for example, various video applications and WeChat) are installed on the terminal device 100, and network servers corresponding to the plurality of applications pushes various notifications to the plurality of applications. The RF circuit 110 of the terminal device 100 receives various notifications pushed by the network servers to the plurality of applications. In other words, the terminal device 100 receives any notification that is received by using the foregoing procedure. The RF circuit 110 of the terminal device 100 subsequently sends the various notifications to the processor 130 of the terminal device 100. The processor 130 then displays the various notifications by using the display unit 160 of the terminal device 100. For example, as shown in FIG. 3, the terminal device displays a notification. The notification may be displayed in a manner preset by a user, for example, displayed in a form of a banner notification, a reminder notification, or the like. Specifically, referring to FIG. 3, the banner notification is a notification that is displayed on the top of a screen of the terminal device and automatically disappears after fixed duration; while the reminder notification is a notification that is continuously displayed on the top of the screen of the terminal device.

In a specific implementation, the terminal device 100 may receive a notification in, but not limited to, the following two scenarios:
Scenario 1: The terminal device 100 receives a notification in a preset scenario. The preset scenario may be but is not limited to any one of the following scenarios: the terminal device 100 is in a full-screen display state (excluding a lock screen and a home screen); or the terminal device 100 is in a state of displaying a preset user interface of an application.
   For example, when the user watches a video by using a video application or browses a shopping page by using a shopping application, the terminal device 100 is usually in a full-screen display state.
   For another example, the terminal device 100 presets a user interface of an application, for example, a user interface of a game application or a user interface of a video application as the preset user interface of an application. When the user plays a game by using a game application or watches a video by using a video application, the terminal device 100 is in a state of displaying the preset user interface of an application.
Scenario 2: The terminal device 100 receives a notification in real time in a power-on state.
   For example, in this scenario, provided that the terminal device 100 is in a power-on state, the terminal device 100 receives a notification in real time in any of the following cases: a lock screen state, a home screen display state, or a state of switching between user interfaces of several applications.

Step 202: The terminal device 100 determines whether the user performs a removal operation within preset duration before a moment at which the notification is received.

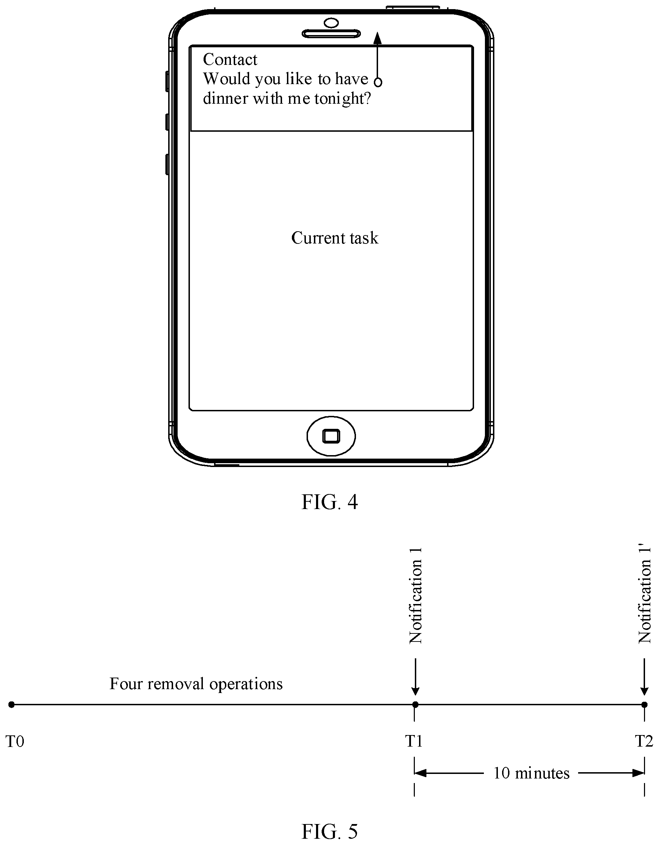

In actual application, when the terminal device 100 constantly displays various received notifications, causing interference to the user and affecting current experience of the user, the user constantly removes the various notifications displayed by the terminal device 100. The user removes the notification in a plurality of manners, for example, flicking up the notification, flicking left the notification and tapping "delete", or another manner. The foregoing operations are all removal operations performed by the user. For example, FIG. 4 shows removal performed by the user by flicking-up a notification displayed by the terminal device, namely, a removal operation performed by the user.

Specifically, a same method for removing the notification by the terminal device 100 is used in either of the foregoing two scenarios, described in step 201, in which the terminal device 100 receives a notification. A specific method may be as follows:
After the terminal device 100 displays the received notification, when the input unit 150 of the terminal device 100 receives an instruction of a removal operation from the user for removing the notification, the input unit 150 sends the instruction to the processor 130 of the terminal device 100. The processor 130 stops displaying the notification, that is, the terminal device 100 responds to the removal operation of the user.

In an optional implementation, the preset duration may be specifically set according to an actual status. Specifically, the preset duration may be fixed duration, for example, one hour, one day, one week, or one month. In the first scenario, that is mentioned above, in which the terminal device 100 receives a notification, the preset duration may be duration from a moment at which the terminal device 100 enters the preset scenario to a moment at which the terminal device 100 receives the notification. In addition, the preset duration certainly may alternatively be set according to a plurality of cases. This is not limited in this application.

In an optional implementation, a flag may be preset for the removal operation in the terminal device 100 to indicate whether the user performs a removal operation. Specifically, it may be specified that a preset flag of 1 indicates that the user performs a removal operation, and a preset flag of 0 indicates that the user does not perform a removal operation. In specific implementation, when the terminal device 100 displays a notification and the notification is removed by the user, the terminal device 100 detects a removal operation performed on the notification, the terminal device 100 may set the preset flag to 1, indicating that the user performs a removal operation. When the terminal device 100 displays a notification, and the user performs a specified operation (for example, an operation of tapping to open the notification) other than a removal operation on the notification, the terminal device 100 detects the specified operation on the notification, and may set the preset flag to 0, indicating that the user does not perform a removal operation.

In an optional implementation, when the terminal device 100 displays a notification and the notification is removed by the user, the terminal device 100 detects a removal operation performed by the user, 1 is added to a quantity of removal operations performed by the user. When the terminal device 100 displays a notification, the user performs a specified operation (for example, an operation of tapping to open the notification) other than a removal operation on the notification, and the terminal device 100 detects the specified operation performed on the notification, the terminal device 100 resets the quantity of removal operations performed by the user to zero. In this way, the terminal device determines whether the quantity of removal operations performed by the user is zero, to determine whether the user performs a removal operation. To be specific, when the quantity of removal operations performed by the user is not zero, the terminal device determines that the user performs a removal operation; while when the quantity of removal operations performed by the user is zero, the terminal device determines that the user does not perform a removal operation.

In an optional implementation, in a case that the preset duration is fixed duration, when the terminal device 100 displays a notification and the notification is removed by the user, the terminal device 100 may use storage duration as the preset duration for the removed notification, store a processed notification into a database, where the storage duration is duration for which the processed notification is stored in the database. When the processed notification is stored for a time of the preset duration, the stored notification is cleared. When the terminal device 100 displays a notification, the user performs a specified operation (for example, an operation of tapping to open the notification) other than a removal operation on the notification, and the terminal device 100 detects the specified operation performed on the notification, the terminal device clears all notifications stored in the database. In this way, the terminal device 100 may query the database, and count a quantity of notifications stored in the database. It may be considered that by means of the counted quantity of removal operations performed by the user within the preset duration, whether the user performs a removal operation within the preset duration can further be determined by determining whether the quantity of removal operations performed by the user is zero.

Optionally, that the terminal device 100 determines whether the user performs a removal operation within the preset duration may be specifically but is not limited to the following three cases:
Case 1: The terminal device 100 determines whether the user performs a removal operation on any displayed notification within the preset duration.
   In the foregoing case 1, when the user does not want to receive any notification, the user removes any notification displayed by the terminal device 100. For example, the first case is usually applicable to the following scenarios: a scenario in which the terminal device 100 is in a lock screen state or in a state of displaying a home screen; or a scenario in which the terminal device 100 is in a full-screen display state because the user is watching a video by using the terminal device 100 or the user is playing a game by using the terminal device 100.
Case 2: The terminal device 100 determines a notification source of the notification, and determines whether a removal operation is performed on the notification from the notification source within the preset duration.
   In the foregoing case 2, when a removal operation is performed on the notification from the notification source within the preset duration, in this case, the user merely does not want to receive the notification from the notification source, and therefore the user removes the notification, from the notification source, displayed by the terminal device 100.
   Optionally, the notification source of the notification is a first application or a specified contact of a second application, and either of the first application and the second application is any one of at least one application installed on the terminal device.
   For example, the terminal device 100 determines that a notification source of the notification is microblog, a news application, or the like. Using microblog as an example, the terminal device 100 determines whether a removal operation is performed on a notification from microblog within the preset duration. If the terminal device 100 determines that a removal operation is performed, it indicates that the user merely does not want to receive a notification from microblog within the preset duration, and the user constantly removes a notification from microblog. Subsequently, the terminal device 100 proceeds to step 203. If the terminal device 100 determines that a removal operation is not performed, it indicates that the user does not mind receiving a notification from microblog in real time, and then the terminal device 100 instructs to normally display the notification.
   For another example, the terminal device 100 determines that a notification source of the notification is a specified contact in an application such as WeChat, QQ, an SMS application, or the like that includes a plurality of contacts. Using WeChat as an example, the terminal device 100 determines whether a removal operation is performed on a notification from a specified contact in WeChat within the preset duration. If the terminal device 100 determines that a removal operation is performed, it indicates that the user merely does not want to receive a notification from the specified contact in WeChat within the preset duration, and the user constantly removes a notification from the specified contact in WeChat. Subsequently, the terminal device 100 proceeds to step 203. If the terminal device 100 determines that a removal operation is not performed, it indicates that the user does not mind receiving a notification from the specified contact in WeChat in real time, and then the terminal device 100 instructs to normally display the notification. The specified contact may be a person, or may be a contact group including a plurality of contacts, or the like. For example, when the notification source is a specified contact in WeChat, the specified contact may be "Alice", or may be "Class xx". For another example, when the notification source is an SMS application, the specified contact may be "Bob", or may be "xx contact group".
   In an optional implementation, a specific method for determining, by the terminal device 100, a notification source of the notification may be as follows:
   When the notification source is the first application, the terminal device 100 may find out, by analyzing an application identifier or application attribute information of an application to which the notification belongs, a specific application that is the first application (namely, the notification source). Specifically, a package name of a data packet of the notification may be used to identify the application identifier. For example, if the terminal device 100 determines that an application identifier corresponding to a package name of the notification is a microblog identifier, the terminal device 100 determines that the notification source is microblog.
   When the notification source is a specified contact of the second application, the terminal device 100 may first find out, by analyzing an application identifier or application attribute information of an application to which the notification belongs, a specific application that is the second application, and then analyze content information of the notification and/or included contact details of the notification, to determine a specified contact (namely, the notification source) of the second application. For example, after determining, by means of analysis, that the second application is WeChat, the terminal device 100 determines, by using content information of the notification, that the notification is a notification from a contact A or a notification from a group chat A in WeChat, and further determine that the specified contact of the second application is the contact A in WeChat or the group chat A in WeChat. For another example, after determining, by means of analysis, that the second application is an SMS application, the terminal device 100 determines, by analyzing contact details included in the notification, that the notification is a notification from "Bob" in the SMS application. Specifically, the terminal device 100 may match the contact details included in the notification and a phone number of a contact prestored in the memory 140 of the terminal device 100, to determine that a matched contact is "Bob".
Case 3: The terminal device 100 determines a priority of the notification, and determines whether a removal operation is performed, within the preset duration, on a notification whose priority is higher than the determined priority.

Specifically, in the foregoing case 3, the terminal device 100 presets priorities of notifications, and the terminal device 100 may compare priorities of the notifications based on the preset priorities of the notifications.

For example, the terminal device 100 presets that a priority of a notification from WeChat is higher than a priority of a notification from an express application, and a priority of a notification from an express application is higher than a priority of a notification from a news application. According to this priority setting, when the notification is a notification from a news application, the terminal device 100 needs to determine whether a removal operation is performed on a notification from WeChat and/or a notification from an express application within the preset duration. If a removal operation is performed on a notification from WeChat and/or a notification from an express application within the preset duration, the terminal device 100 proceeds to step 203. If a removal operation is not performed on a notification from WeChat and/or a notification from an express application within the preset duration, the terminal device 100 instructs to normally display the notification from the news application.

Step 203: The terminal device 100 determines a delay duration value in response to determining that the user performs a removal operation within the preset duration, and instructs to display the notification after a delay time of the delay duration value.

In an optional implementation, the terminal device 100 determines whether the user performs a removal operation within preset duration before a moment at which the notification is received, and determines a delay duration value in response to determining that the user performs a removal operation within the preset duration. Specifically, the following two methods may be included.

Method 1: The terminal device 100 obtains a quantity of removal operations performed by the user within the preset duration, and determines a delay duration value corresponding to the quantity of removal operations.

According to the descriptions in the foregoing step 202, when the terminal device 100 obtains the quantity of removal operations performed by the user within the preset duration, the terminal device 100 may directly query an accumulated value of a quantity of removal operations obtained after 1 is added, when the terminal device 100 detects a removal operation performed by the user, to the quantity of removal operations performed by the user, where the queried accumulated value of the quantity of removal operations is the obtained quantity of removal operations. The terminal device 100 may further count, by querying a database, a quantity of notifications stored in the database, where the counted quantity is the obtained quantity of removal operations.

Optionally, the terminal device 100 may perform the method 1 by using the following steps: the terminal device obtains a quantity of removal operations performed by the user within the preset duration; and determines, in response to determining that the quantity of removal operations performed by the user within the preset duration is greater than or equal to 1, a delay duration value corresponding to the quantity of removal operations.

In an optional implementation, a specific method for determining, by the terminal device 100, the delay duration value corresponding to the quantity of removal operations may be as follows:
A1: The terminal device 100 determines a specified quantity threshold range to which the quantity of removal operations belongs, and queries, based on a preset correspondence between a specified quantity threshold range and a delay duration value, a delay duration value corresponding to the determined specified quantity threshold range.
A2: The terminal device 100 determines, based on a preset correspondence between a quantity of removal operations and a delay duration value, the delay duration value corresponding to the quantity of removal operations.
A3: The terminal device 100 determines, based on a preset function relationship between a quantity of removal operations and a delay duration value, the delay duration value corresponding to the quantity of removal operations. The function relationship may be as follows: the delay duration value is a proportional function of the quantity of removal operations, the delay duration value is an exponential function of the quantity of removal operations, or the like. This is not limited in this application.

In actual application, the quantity, of removal operations performed by the user within the preset duration, obtained by the terminal device 100 represents a degree of how much the user does not want to receive a notification. To be specific, a larger quantity of removal operations indicates a higher degree that the user does not want to receive a notification.

In an optional implementation, the memory 140 of the terminal device 100 stores the preset correspondence between a specified quantity threshold range and a delay duration value, or the preset correspondence between a quantity of removal operations and a delay duration value, or the preset function relationship between a quantity of removal operations and a delay duration value, to enable the terminal device 100 to determine a delay duration value corresponding to the quantity of removal operations, and further instruct to display the notification after a delay time of the delay duration value.

Specifically, the preset correspondence between a specified quantity threshold range and a delay duration value or the preset correspondence between a quantity of removal operations and a delay duration value may be stored in the memory 140 in a form of a table. For example, the preset correspondence between a specified quantity threshold range and a delay duration value may be as shown in the following Table 1, and the preset correspondence between a quantity of removal operations and a delay duration value may be as shown in the following Table 2.

**Table 1 Correspondence between a preset quantity threshold range and a delay duration value**

| Specified quantity threshold range/times | Delay duration value/minutes |
|---|---|
| 1-2 | 5 |
| 3-5 | 10 |
| 6-10 | 15 |
| 11-20 | 20 |
| 21-40 | 25 |
| ··· | ··· |
| ··· | ··· |

**Table 2 Correspondence between a quantity of removal operations and a delay duration value**

| Quantity of removal operations/times | Delay duration value/minutes |
|---|---|
| 1 | 3 |
| 2 | 5 |
| 3 | 10 |
| 4 | 15 |
| 5 | 20 |
| ··· | ··· |
| ··· | ··· |

It can be learned from the Table 1 and Table 2 that a larger quantity of removal operations indicates a larger corresponding delay duration value. To be specific, a larger specified quantity of removal operations indicates a higher degree that the user does not want to receive a notification. Therefore, the terminal device 100 may predict psychological feelings of the user based on the obtained quantity of removal operations, so that the terminal device 100 subsequently instructs to display the notification after a delay time of the delay duration value, to adapt to psychology of the user.

Method 2: The terminal device 100 determines whether the user performs a removal operation within preset duration before a moment at which the notification is received, and obtains a preset delay duration value in response to determining that the user performs a removal operation within the preset duration.

In the method 2, the preset delay duration value obtained by the terminal device 100 in response to determining that the user performs a removal operation within the preset duration is a fixed value. In other words, provided that it is determined that the user performs a removal operation within the preset duration, the delay duration value subsequently used for instructing to delay displaying the notification is a fixed value. A preset delay duration value may be specifically set according to an actual status of the user. This is not limited in this application.

Optionally, the terminal device 100 may perform the foregoing method 2 by using the following two methods:
B1. The terminal device 100 obtains a quantity of removal operations performed by the user within the preset duration, and obtains a preset delay duration value in response to determining that the quantity of removal operations performed by the user within the preset duration is not zero. A method for obtaining, by the terminal device 100, a quantity of removal operations is the same as that in the foregoing method 1, and details are not described herein again.
B2. The terminal device 100 queries a preset flag of a removal operation, and obtains a preset delay duration value in response to determining that the preset flag is 1.

The following makes further description by separately using examples for instructing to display the notification after a delay time of a delay duration value that is determined based on the method 1 and the method 2.

Example 1: The schematic diagram shown in FIG. 5 is used as an example to describe a case in which the delay duration value is determined by using the method 1.

T1 in FIG. 5 represents a moment at which the terminal device 100 receives a notification 1, and duration between T1 and a previous moment T0 is the preset duration. Assuming that the terminal device 100 determines that a quantity of removal operations performed by the user between T0 and T1 is three, and further determines that a delay duration value corresponding to three times of removal operations is 10 minutes (for example, it can be obtained by querying Table 1 or Table 2), the terminal device 100 may instruct to delay the notification 1 for 10 minutes, and display the notification 1 at a moment T2, that is, duration between T1 and T2 shown in FIG. 5 is 10 minutes, and a notification 1' is the notification 1 displayed after a delay time of 10 minutes.

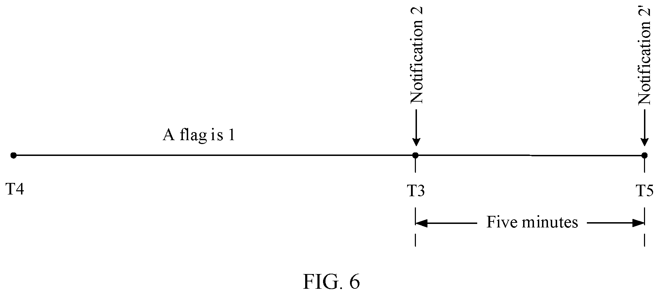

Example 2: The schematic diagram shown in FIG. 6 is used as an example to describe a case in which the delay duration value is determined by using the method 2.

T3 in FIG. 6 represents a moment at which the terminal device 100 receives a notification 2, and duration between T3 and a previous moment T4 is the preset duration. Assuming that the terminal device 100 determines that a preset flag of a removal operation between T3 and T4 is 1, and a preset delay duration value is directly obtained and is five minutes (which is a fixed value and is used as an example only for description). The terminal device 100 may instruct to delay the notification 2 for five minutes, and display the notification 2 at a moment T5, that is, duration between T3 and T5 shown in FIG. 6 is five minutes, and a notification 2' is the notification 2 displayed after a delay time of five minutes.

The foregoing examples are merely examples, and are not intended to limit this application. There are a plurality of other example forms, and examples are not listed herein.

In specific implementation, after the terminal device 100 performs step 202, in response to determining that the user does not perform a removal operation within the preset duration, the terminal device 100 instructs to normally display the notification. Specifically, when the terminal device 100 obtains the quantity of removal operations performed by the user within the preset duration and the quantity is zero, or the terminal device 100 determines that a preset flag of the quantity of removal operations is 0, the terminal device determines that the user does not perform a removal operation within the preset duration.

According to the notification processing method in this embodiment of this application, the terminal device receives a notification; determines whether the user performs a removal operation within preset duration before a moment at which the notification is received; and determines a delay duration value in response to determining that the user performs a removal operation within the preset duration, and instructs to display the notification after a delay time of the delay duration value. According to the method, the terminal device may determine a delay duration value in response to determining that the user performs a removal operation within preset duration before a moment at which a notification is received, to automatically instruct to display the notification after a delay time of the delay duration value, without needing a manual setting of the user. In this way, flexibility of delayed displaying of a notification can be improved, and user experience can be improved.

Based on the foregoing embodiment, the following describes in detail a specific example of a scenario in which Alice watches a video by using a terminal device.

In the foregoing scenario, when Alice is watching a video by using the terminal device, Alice does not want to be disturbed by notifications constantly displayed by the terminal device, and therefore Alice constantly removes the notifications displayed by the terminal device. When Alice is watching a video, duration between a moment at which the terminal device receives a notification each time and a moment at which Alice enters a video display user interface during activating of a video application is considered as preset duration.

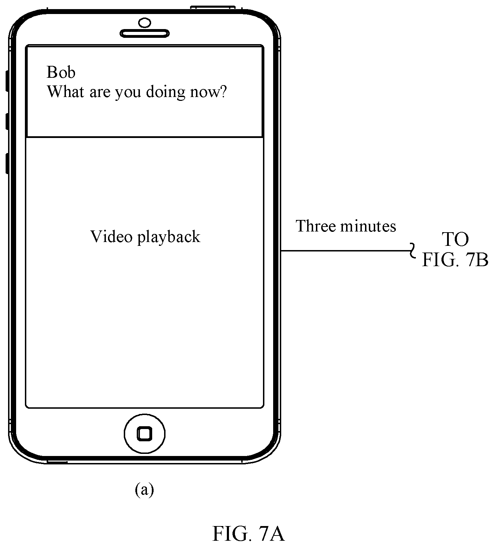

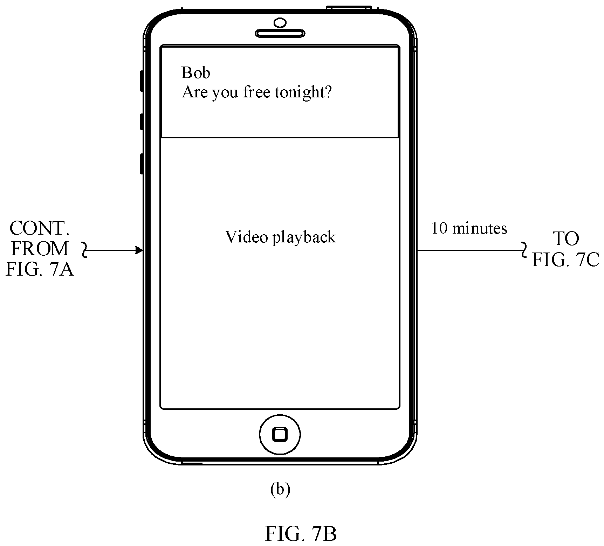

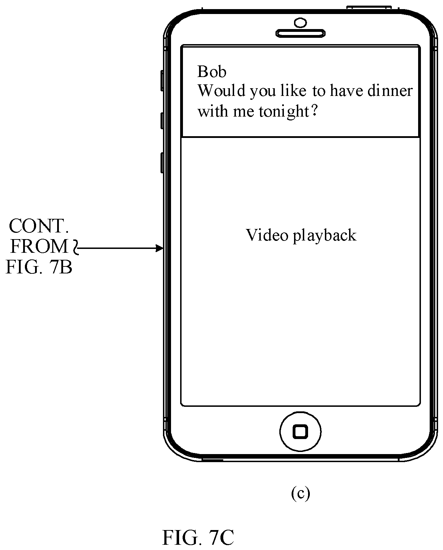

For example, when Alice is watching a video by using the terminal device, each time the terminal device displays a notification from Bob in WeChat, Alice removes the notification. A schematic diagram shown in FIG. 7A, FIG. 7B, and FIG. 7C is a schematic effect diagram of delaying, by the terminal device, displaying of a notification from Bob by using the method in the foregoing embodiment.

As shown in (a) in FIG. 7A, the terminal device displays a notification corresponding to Bob. Assuming that in this case, the terminal device receives a first notification, and determines that a quantity of removal operations performed by Alice on the notification from Bob between a moment at which the first notification is received and a moment at which the terminal device enters a video display user interface is one, the terminal device instructs to display the first notification after a delay time of three minutes, as shown in (b) in FIG. 7B. Assuming that in this case, the terminal device receives a second notification, and determines that a quantity of removal operations performed by Alice on the notification from Bob between the moment at which the first notification is received and the moment at which the terminal device enters the video display user interface is three, the terminal device instructs to display the first notification after a delay time of 10 minutes, as shown in (c) in FIG. 7C.

The delay duration values corresponding to the quantity of removal operations described in the foregoing each is determined based on the correspondence shown in Table 2 in the foregoing embodiment, and are merely examples herein.

It can be learned from the foregoing description of FIG. 7A, FIG. 7B, and FIG. 7C that, when Alice is watching a video, the terminal device reduces notifications that cause interference to Alice, to improve video watching experience of Alice.

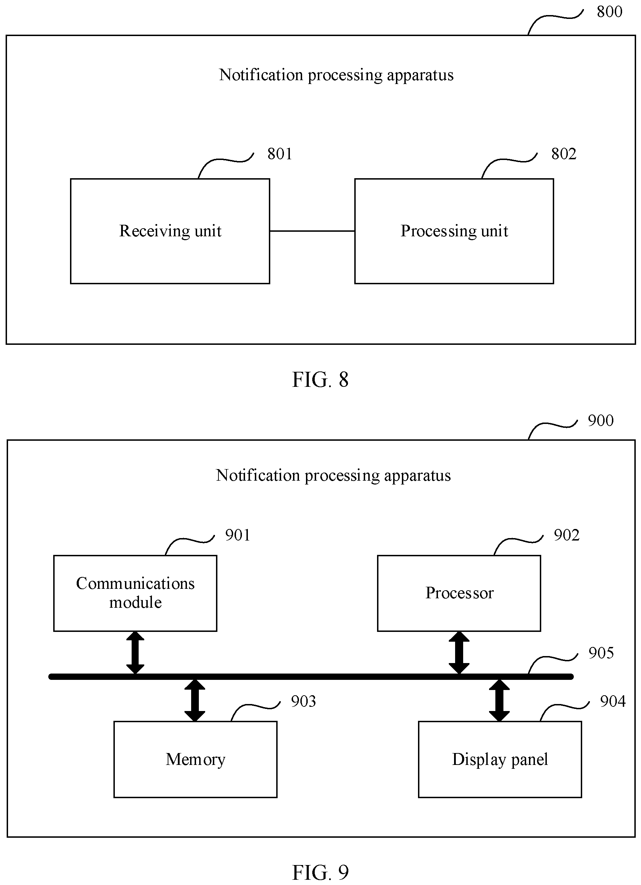

Based on the foregoing embodiments, an embodiment of this application further provides a notification processing apparatus. The notification processing apparatus is configured to implement the notification processing method shown in FIG. 2. Referring to FIG. 8, the notification processing apparatus 800 includes: a receiving unit 801 and a processing unit 802.

The receiving unit 801 is configured to receive a notification.

The processing unit 802 is configured to: determine whether a user performs a removal operation within preset duration before a moment at which the receiving unit 801 receives the notification; and determine a delay duration value in response to determining that the user performs a removal operation within the preset duration, and instruct to display the notification after a delay time of the delay duration value.

Optionally, when determining whether the user performs a removal operation within the preset duration before the moment at which the notification is received, and determining the delay duration value in response to determining that the user performs a removal operation within the preset duration, the processing unit 802 is specifically configured to:
obtain a quantity of removal operations performed by the user within the preset duration, and determine a delay duration value corresponding to the quantity of removal operations; or
determine whether the user performs a removal operation within the preset duration before the moment at which the notification is received; and obtain a preset delay duration value in response to determining that the user performs a removal operation within the preset duration.

Optionally, when obtaining the quantity of removal operations performed by the user within the preset duration, and determining the delay duration value corresponding to the quantity of removal operations, the processing unit 802 is specifically configured to:
obtain the quantity of removal operations performed by the user within the preset duration; and determine, in response to determining that the quantity of removal operations performed by the user within the preset duration is greater than or equal to 1, the delay duration value corresponding to the quantity of removal operations.

Optionally, when determining whether the user performs a removal operation within the preset duration before the moment at which the notification is received; and obtaining the preset delay duration value in response to determining that the user performs a removal operation within the preset duration, the processing unit 802 is specifically configured to:
obtain the quantity of removal operations performed by the user within the preset duration; and obtain the preset delay duration value in response to determining that the quantity of removal operations performed by the user within the preset duration is not zero

Optionally, when determining whether the user performs a removal operation within the preset duration, the processing unit 802 is specifically configured to:
determine whether a removal operation is performed on any displayed notification within the preset duration; or
determine a notification source of the notification, and determine whether a removal operation is performed on the notification from the notification source within the preset duration; or
determine a priority of the notification, and determine whether a removal operation is performed, within the preset duration, on a notification whose priority is higher than the determined priority.

Optionally, when receiving a notification, the receiving unit 801 is specifically configured to: receive a notification in a preset scenario. The preset scenario is any one of the following scenarios: The notification processing apparatus 800 is in a full-screen display state; or the notification processing apparatus 800 is in a state of displaying a preset user interface of an application.

Optionally, the notification processing apparatus 800 may further include a display unit that is configured to display the notification.

In this embodiment of this application, the notification processing apparatus receives a notification; determines whether the user performs a removal operation within preset duration before a moment at which the notification is received; and determines a delay duration value in response to determining that the user performs a removal operation within the preset duration, and instructs to display the notification after a delay time of the delay duration value. According to the method, the notification processing apparatus may determine a delay duration value in response to determining that the user performs a removal operation within preset duration before a moment at which a notification is received, to automatically instruct to display the notification after a delay time of the delay duration value, without needing a manual setting of the user. In this way, flexibility of delayed displaying of a notification can be improved, and user experience can be improved.

It should be noted that the unit division in this embodiment of this application is an example, and is merely logical function division. There may be another division manner during actual implementation. In addition, functional units in this embodiment of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such understanding, the technical solutions of this application essentially, or a part contributing to the prior art, or all or a part of the technical solutions may be implemented in a form of a computer software product. The computer software product is stored in a storage medium that includes several instructions for instructing a computer device (which may be a personal computer, a server, a network device, or the like) or a processor (processor) to perform all or some of the steps of the methods described in the embodiments of this application. The storage medium includes any medium such as a USB flash drive, a removable hard disk, a read-only memory (read-only memory, ROM), a random access memory (random access memory, RAM), a magnetic disk, or an optical disc, that can store program code.

Based on the foregoing embodiments, an embodiment of this application further provides a notification processing apparatus. The notification processing apparatus is configured to implement the notification processing method shown in FIG. 2. Referring to FIG. 9, the notification processing apparatus 900 includes: a communications module 901, a processor 902, a memory 903, and a display panel 904.

The communications module 901, the processor 902, the memory 903, and the display panel 904 are connected to each other. Optionally, the communications module 901, the processor 902, the memory 903, and the display panel 904 may be connected to each other by using a bus 905. The bus 905 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of indication, the bus is indicated by using only one bold line in FIG. 9. However, it does not indicate that there is only one bus or only one type of bus.

When the notification processing apparatus 900 implements the notification processing method shown in FIG. 2:
The communications module 901 is configured to receive a notification. The communications module 901 may be but is not limited to an RF circuit, a Wi-Fi module, a communications interface, a Bluetooth module, or the like.

The display panel 904 is configured to display the notification.

The processor 902 may be represented as a chip or a system on chip (system on chip, SOC), and is disposed in the notification processing apparatus 900 in this embodiment of this application, so that the notification processing apparatus 900 implements the notification processing method in the embodiments of this application. Specifically, the processor 902 is configured to determine whether a user performs a removal operation within preset duration before a moment at which the communications module 901 receives the notification; and determine a delay duration value in response to determining that the user performs a removal operation within the preset duration, and instruct the display panel 904 to display the notification after a delay time of the delay duration value.

In an optional implementation, when determining whether the user performs a removal operation within the preset duration before the moment at which the notification is received; and determining the delay duration value in response to determining that the user performs a removal operation within the preset duration, the processor 902 is specifically configured to:
obtain a quantity of removal operations performed by the user within the preset duration, and determine a delay duration value corresponding to the quantity of removal operations; or
determine whether the user performs a removal operation within the preset duration before the moment at which the notification is received; and obtain a preset delay duration value in response to determining that the user performs a removal operation within the preset duration.

In an optional implementation, when obtaining the quantity of removal operations performed by the user within the preset duration, and determining the delay duration value corresponding to the quantity of removal operations, the processor 902 is specifically configured to:
obtain the quantity of removal operations performed by the user within the preset duration; and determine, in response to determining that the quantity of removal operations performed by the user within the preset duration is greater than or equal to 1, the delay duration value corresponding to the quantity of removal operations.

In an optional implementation, when determining whether the user performs a removal operation within the preset duration before the moment at which the notification is received; and obtaining the preset delay duration value in response to determining that the user performs a removal operation within the preset duration, the processor 902 is specifically configured to:
obtain the quantity of removal operations performed by the user within the preset duration; and obtain the preset delay duration value in response to determining that the quantity of removal operations performed by the user within the preset duration is not zero.

In an optional implementation, when determining whether the user performs a removal operation within the preset duration, the processor 902 is specifically configured to:
determine whether a removal operation is performed on any displayed notification within the preset duration; or
determine a notification source of the notification, and determine whether a removal operation is performed on the notification from the notification source within the preset duration; or
determine a priority of the notification, and determine whether a removal operation is performed, within the preset duration, on a notification whose priority is higher than the determined priority.

Optionally, when receiving the notification, the communications module 901 is specifically configured to: receive a notification in a preset scenario. Optionally, the preset scenario is any one of the following scenarios: The notification processing apparatus 900 is in a full-screen display state; or the notification processing apparatus 900 is in a state of displaying a preset user interface of an application.

The memory 903 is configured to store a program, and the like. Specifically, the program may include program code, and the program code includes a computer operation instruction. The memory 903 may include a RAM, or may further include a nonvolatile memory (nonvolatile memory), for example, at least one magnetic disk storage. The processor 902 executes the application program stored in the memory 903, to implement the foregoing function, so as to implement the notification processing method shown in FIG. 2.

In this embodiment of this application, the notification processing apparatus receives a notification; determines whether the user performs a removal operation within preset duration before a moment at which the notification is received; and determines a delay duration value in response to determining that the user performs a removal operation within the preset duration, and instructs to display the notification after a delay time of the delay duration value. According to the method, the notification processing apparatus may determine a delay duration value in response to determining that the user performs a removal operation within preset duration before a moment at which a notification is received, to automatically instruct to display the notification after a delay time of the delay duration value, without needing a manual setting of the user. In this way, flexibility of delayed displaying of a notification can be improved, and user experience can be improved.

In sum, according to the notification processing method and apparatus in the embodiments of this application, the notification processing apparatus receives a notification; determines whether the user performs a removal operation within preset duration before a moment at which the notification is received; and determines a delay duration value in response to determining that the user performs a removal operation within the preset duration, and instructs to display the notification after a delay time of the delay duration value. According to the method, the terminal device may determine a delay duration value in response to determining that the user performs a removal operation within preset duration before a moment at which a notification is received, to automatically instruct to display the notification after a delay time of the delay duration value, without needing a manual setting of the user. In this way, flexibility of delayed displaying of a notification can be improved, and user experience can be improved.

A person skilled in the art should understand that the embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a magnetic disk storage, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each procedure and/or each block in the flowcharts and/or the block diagrams and a combination of a procedure and/or a block in the flowcharts and/or the block diagrams. The computer program instructions may be provided for a general-purpose computer, a special-purpose computer, an embedded processor, or a processor of another programmable data processing device to generate a machine, so that the instructions executed by a computer or the processor of another programmable data processing device generate an apparatus for implementing a specific function in one or more procedures in the flowcharts and/or in one or more blocks in the block diagrams.

The computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more procedures in the flowcharts and/or in one or more blocks in the block diagrams.

Apparently, a person skilled in the art can make various modifications and variations to embodiments of this application without departing from the scope of the embodiments of this application. This application is intended to cover these modifications and variations provided that they fall within the scope of protection defined by the following claims and their equivalent technologies of this application.

## Claims

1. A notification processing method, comprising:
receiving, by a terminal device, a notification;
determining, by the terminal device, whether a user performs a removal operation within preset duration before a moment at which the notification is received; and
determining, by the terminal device, a delay duration value in response to determining that the user performs a removal operation within the preset duration, and instructing to display the notification after a delay time of the delay duration value.

2. The method according to claim 1, wherein the determining, by the terminal device, whether a user performs a removal operation within preset duration before a moment at which the notification is received; and determining a delay duration value in response to determining that the user performs a removal operation within the preset duration comprises:
obtaining, by the terminal device, a quantity of removal operations performed by the user within the preset duration, and determining a delay duration value corresponding to the quantity of removal operations; or
determining, by the terminal device, whether the user performs a removal operation within the preset duration before the moment at which the notification is received; and obtaining a preset delay duration value in response to determining that the user performs a removal operation within the preset duration.

3. The method according to claim 2, wherein the obtaining, by the terminal device, a quantity of removal operations performed by the user within the preset duration, and determining a delay duration value corresponding to the quantity of removal operations comprises:
obtaining, by the terminal device, the quantity of removal operations performed by the user within the preset duration; and determining, in response to determining that the quantity of removal operations performed by the user within the preset duration is greater than or equal to 1, the delay duration value corresponding to the quantity of removal operations.

4. The method according to claim 2, wherein the determining, by the terminal device, whether the user performs a removal operation within the preset duration before the moment at which the notification is received; and obtaining a preset delay duration value in response to determining that the user performs a removal operation within the preset duration comprises:
obtaining, by the terminal device, the quantity of removal operations performed by the user within the preset duration; and obtaining the preset delay duration value in response to determining that the quantity of removal operations performed by the user within the preset duration is not zero.

5. The method according to any one of claims 1 to 4, wherein the determining, by the terminal device, whether a user performs a removal operation within preset duration comprises:
determining, by the terminal device, whether a removal operation is performed on any displayed notification within the preset duration; or
determining, by the terminal device, a notification source of the notification, and determining whether a removal operation is performed on the notification from the notification source within the preset duration; or
determining, by the terminal device, a priority of the notification, and determining whether a removal operation is performed, within the preset duration, on a notification whose priority is higher than the determined priority.

6. The method according to any one of claims 1 to 5, wherein the receiving, by a terminal device, a notification is specifically:
receiving, by the terminal device, a notification in a preset scenario.

7. The method according to claim 6, wherein the preset scenario is any one of the following scenarios:
the terminal device is in a full-screen display state; or
the terminal device is in a state of displaying a preset user interface of an application.

8. A notification processing apparatus, comprising:
a memory, configured to store a program instruction;
a communications module, configured to receive a notification;
a display panel, configured to display the notification; and
a processor, configured to read the program instruction stored in the memory, and perform the following operations: determining whether a user performs a removal operation within preset duration before a moment at which the communications module receives the notification; and determining a delay duration value in response to determining that the user performs a removal operation within the preset duration, and instructing the display panel to display the notification after a delay time of the delay duration value.

9. The apparatus according to claim 8, wherein when determining whether the user performs a removal operation within the preset duration before the moment at which the notification is received; and determining the delay duration value in response to determining that the user performs a removal operation within the preset duration, the processor is specifically configured to:
obtain a quantity of removal operations performed by the user within the preset duration, and determine a delay duration value corresponding to the quantity of removal operations; or
determine whether the user performs a removal operation within the preset duration before the moment at which the notification is received; and obtain a preset delay duration value in response to determining that the user performs a removal operation within the preset duration.

10. The apparatus according to claim 9, wherein when obtaining the quantity of removal operations performed by the user within the preset duration, and determining the delay duration value corresponding to the quantity of removal operations, the processor is specifically configured to:
obtain the quantity of removal operations performed by the user within the preset duration; and determine, in response to determining that the quantity of removal operations performed by the user within the preset duration is greater than or equal to 1, the delay duration value corresponding to the quantity of removal operations.

11. The apparatus according to claim 9, wherein when determining whether the user performs a removal operation within the preset duration before the moment at which the notification is received; and obtaining the preset delay duration value in response to determining that the user performs a removal operation within the preset duration, the processor is specifically configured to:
obtain the quantity of removal operations performed by the user within the preset duration; and obtain the preset delay duration value in response to determining that the quantity of removal operations performed by the user within the preset duration is not zero.

12. The apparatus according to any one of claims 8 to 11, wherein when determining whether the user performs a removal operation within the preset duration, the processor is specifically configured to:
determine whether a removal operation is performed on any displayed notification within the preset duration; or
determine a notification source of the notification, and determine whether a removal operation is performed on the notification from the notification source within the preset duration; or
determine a priority of the notification, and determine whether a removal operation is performed, within the preset duration, on a notification whose priority is higher than the determined priority.

13. The apparatus according to any one of claims 8 to 12, wherein when receiving a notification, the communications module is specifically configured to:
receive a notification in a preset scenario.

14. The apparatus according to claim 13, wherein the preset scenario is any one of the following scenarios:
the notification processing apparatus is in a full-screen display state; or
the notification processing apparatus is in a state of displaying a preset user interface of an application.

15. A computer storage medium, wherein the computer storage medium stores a computer executable instruction, and when the computer executable instruction is invoked by a computer, the computer is enabled to perform the method according to any one of claims 1 to 7.

16. A notification processing apparatus, wherein the apparatus is connected to a memory, and is configured to read and execute a program instruction stored in the memory, so as to implement the method according to any one of claims 1 to 7.

17. A notification processing apparatus, wherein the apparatus comprises a processor and a memory that are connected to each other, and the processor is configured to read and execute a program instruction stored in the memory, so as to implement the method according to any one of claims 1 to 7.

18. A computer program product, wherein when the computer program product runs on an electronic device, the electronic device is enabled to perform the method according to any one of claims 1 to 7.
